# EUROPÄISCHE PATENTSCHRIFT

(11) **EP 2 322 130 B1**
(45) Veröffentlichungstag und Bekanntmachung des Hinweises auf die Patenterteilung: **16.01.2013**
(21) Anmeldenummer: 09176116.3
(22) Anmeldetag: 16.11.2009
(51) Int. Cl.: A61G 13/10, H02G 3/04

(54) **Medizinische Versorgungseinheit**
Medical supply unit
Unité d'alimentation médicale

(43) Veröffentlichungstag der Anmeldung: 18.05.2011
(73) Patentinhaber: TRUMPF Medizin Systeme GmbH + Co. KG, 07318 Saalfeld (DE)
(72) Erfinder: Bauer, Georg, 85247, Schwabhausen (DE); Frenzel, Mathias, 82110, Germering (DE); Marka, Rudolf, 85737, Ismaning (DE); Rosenheimer, Rouven, 81377, München (DE)
(74) Vertreter: Prüfer & Partner GbR European Patent Attorneys

(56) Entgegenhaltungen:
- EP-A1- 2 058 911
- EP-A2- 0 342 859
- CA-A1- 2 614 658

## Beschreibung

Die Erfindung betrifft eine medizinische Versorgungseinheit, insbesondere eine medizinische Versorgungseinheit mit einem Datenübertragungssystem zur Übertragung von Anweisungen von Steuerungselementen an Aktoren.

Medizinische Versorgungseinheiten werden insbesondere in Operationssälen oder in Intensivstationen in Form von Deckenstativen, Deckenschienen oder Wandschienen ausgeführt. Bewegliche Strukturen der medizinischen Versorgungseinheiten sind in diesen Ausführungen hauptsächlich Schwenkarme, die um eine vertikale Achse horizontal schwenkbar sind oder höhenverstellbare Tragarme, die um eine horizontale Achse vertikal schwenkbar sind. Damit kann ein Stativkopf, der Anbringungs- und Aufstellmöglichkeiten für medizinische Geräte bereitstellt, und Anschlüsse zur Versorgung der medizinischen Geräte mit elektrischen Strom, Datenverbindungen und medizinischen Gasen aufweist, und der an den Schwenkarmen angebracht ist, in eine gewünschte Position bewegt werden. Die einzelnen Gelenke der horizontalen Schwenkarme werden um kontrolliert bewegt werden zu können durch ansteuerbare Bremsen arretiert. Die Hubbewegung der vertikalen Schwenkarme wird entweder durch eine Federkraft unterstützt, wobei die Hubbewegung durch eine Bremse arretierbar ist, oder mit Hilfe eines elektrischen Antriebs durchgeführt.

Die Ansteuerung der Bremsen in den Gelenken für die horizontale Schwenkbewegung und in dem höhenverstellbaren Stativarm erfolgt meist pneumatisch. Fallweise erfolgt die Ansteuerung auch elektrisch. Die Verbindung zwischen Steuerelementen und Aktoren, also Bremsen oder Antrieben, erfolgt über eine direkte Verdrahtung oder eine direkte Verschlauchung, was einen großen Verdrahtungs- bzw. Verschlauchungsaufwand bedeutet.

Die Steuerelemente sind alternativ als Pneumatikventile oder elektrische Schalter ausgebildet und in Bediengriffen der Stativköpfe untergebracht. Hierbei ergibt sich das Problem, dass ein Versetzen der Bediengriffe mit den Steuerelementen wegen einer Veränderung der Ausrüstung mit medizinischen Geräten auf den Versorgungseinheiten, wobei die Bediengriffe an ihren bisherigen Positionen störend sind, nicht oder nur schwierig möglich ist, da die Pneumatikleitungen oder die elektrischen Kabel oft bei der Befestigung stören oder die hygienischen Bedingungen verschlechtern. Bei dieser Ausführung müssen die Leitungen als fliegende Schläuche bzw. Kabel ausgeführt werden, erhöhen somit den Reinigungs- und Desinfektionsaufwand und verschlechtern gleichzeitig die Reinigungs- und Desinfektionsmöglichkeiten.

Bei einer alternativen Bedienung eines Aktors durch mehrere Steuerelemente ergibt sich ein großer Aufwand hinsichtlich der Verdrahtung oder der Verschlauchung.

Die Offenlegungsschrift der kanadischen Patentanmeldung CA 2 614 658 A1 offenbart ein System mit Schnittstellen für medizinische Geräte. Die medizinischen Geräte werden über ein Netzwerk durch einen Zentralrechner eines Krankenhauses gesteuert, wobei einzelne Module des Systems, an denen die medizinischen Geräte angeschlossen werden, mit dem Netzwerk verbunden sind.

Es besteht also die Aufgabe, die obigen Probleme zu lösen und eine Signalübertragung zwischen den Steuerelementen und den Aktoren bereit zu stellen, die ohne großen Aufwand ausführbar ist, die ein flexibles Versetzen der Steuerelemente ermöglicht ohne die hygienischen Bedingungen zu verschlechtern, und die ein einfaches Realisieren einer Ansteuerung der Aktoren von beliebigen Steuerelementen ermöglicht.

Die Aufgabe wird mit den Merkmalen eines der Ansprüche 1,2 oder 3 gelöst. Weiterbildungen sind Gegenstand der abhängigen Ansprüche.

Ein Aspekt der vorliegenden Erfindung ist das Vorsehen einer medizinischen Versorgungseinheit mit einem Bussystem, das ein Übertragungssystem, Sender und Empfänger aufweist.

Die Erfindung wird anhand eines Ausführungsbeispiels beschrieben. Hierbei zeigt:
Fig. 1 eine perspektivische Ansicht einer medizinischen Versorgungseinheit,
Fig. 2 eine perspektivische Ansicht eines Stativkopfprofils ohne einen Stativkopfdeckel,
Fig. 3 eine perspektivische Ansicht eines Betätigungsgriffs,
Fig. 4 eine Draufsicht auf das Stativkopfprofil ohne Stativkopfdeckel mit kontaktiertem Sender und Empfänger,
Fig. 5 ein Blockschaltbild eines exemplarischen Bussystems,
Fig. 6 einen Schnitt durch ein alternatives Stativkopfprofil, und
Fig. 7 eine perspektivische Ansicht eines alternativen Befestigungselements für einen Bediengriff.

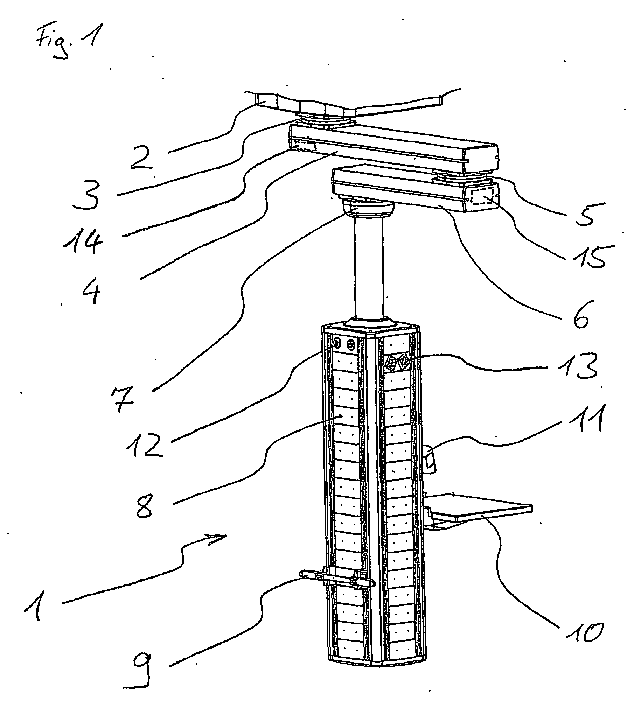

In Fig. 1 ist ein Deckenstativ als eine Ausführungsform einer medizinischen Versorgungseinheit 1 gezeigt. Die medizinische Versorgungseinheit 1 weist eine Deckenbefestigung 2 auf, mit der die medizinische Versorgungseinheit 1 an einer Raumdecke befestigt ist. An der Deckenbefestigung 2 angebracht, weist die medizinische Versorgungseinheit 1 ein oberes Drehgelenk 3 mit einer ansteuerbarer Bremse auf. An dem oberen Drehgelenk 3 ist an einem Ende seiner Oberseite ein oberer Schwenkarm 4 befestigt. Am gegenüberliegenden Ende des oberen Schwenkarms 4 ist auf seiner Unterseite ein mittleres Drehgelenk 5 mit einer ansteuerbaren Bremse angebracht. An dem mittleren Drehgelenk 5 ist wiederum an einem Ende seiner Oberseite ein unterer Schwenkarm 6 angebracht. Am gegenüberliegenden Ende des unteren Schwenkarms 6 ist auf seiner Unterseite ein unteres Drehgelenk 7 mit ansteuerbarer Bremse befestigt. Von dem unteren Drehgelenk 7 aus erstreckt sich ein Rohr, an dem ein Stativkopf 8 angebracht ist. Der Stativkopf 8 weist einen quadratischen Querschnitt mit abgerundeten Ecken auf und erstreckt sich zylindrisch nach unten. An einer Seite des Stativkopfs 8 ist ein Betätigungsgriff 9 angebracht. Auf der gegenüberliegenden Seite des Bediengriffs 9 sind eine Plattform 10 und eine Leuchte 11 teilweise verdeckt dargestellt angebracht. In Seitenflächen des Stativkopfs 8 sind Gassteckdosen 12 und Elektrosteckdosen 13 vorgesehen.

Die medizinische Versorgungseinheit 1 dient zum Aufnehmen von medizinischen Geräten, die beispielsweise auf die Plattform 10 aufgestellt werden, und mit Hilfe von Versorgungsschläuchen und -kabeln an den Gassteckdosen 12 und den Elektrosteckdosen 13 angeschlossen, und damit versorgt werden.

Im oberen Schwenkarm 4 und im unteren Schwenkarm 5 sind jeweils später beschriebene Empfänger 14, 15 vorgesehen. Die Empfänger 14, 15 sind mit Betätigungselementen der ansteuerbaren Bremsen des oberen Drehgelenks 3 und des unteren Drehgelenks 5 verbunden.

Der Stativkopf 8 kann durch das Bedienpersonal an dem Bediengriff 9 ergonomisch gegriffen werden, und im Rahmen des Schwenkbereichs des oberen Arms 4 und des unteren Arms 6 beliebig positioniert werden.

In einer alternativen Ausführungsform ist der untere Schwenkarm als höhenverstellbarer Arm vorgesehen. Damit besteht die Möglichkeit, den Stativkopf 8 nicht nur in einer horizontalen Richtung zu verändern, sondern ebenfalls die Höhe des Stativkopfs 8 innerhalb des vertikalen Schwenkbereichs des höhenverstellbaren Arms zu positionieren. Der höhenverstellbare Arm ist dann mit einem Empfänger 14, 15 versehen, der mit einem Ausgang versehen ist, welcher wiederum mit einem Betätigungselement eines Hubmotors verbunden ist.

In weiteren alternativen Ausführungsformen ist die Konfiguration der medizinischen Versorgungseinheit auch als Deckenstativ mit einer anderen Armkonfiguration, z.B. einarmig mit oder ohne höhenverstellbaren Arm, oder mit einer alternativen Tragstruktur des Stativkopfs, z.B. einer Decken- oder Wandschiene möglich. Die ansteuerbaren Bremsen wirken dann nicht auf Drehgelenke, sondern z.B. auf Laufwagen, die den Stativkopf tragen und an einer Schiene angeordnet sind. Auch hier sind zusätzliche Schwenkarme möglich.

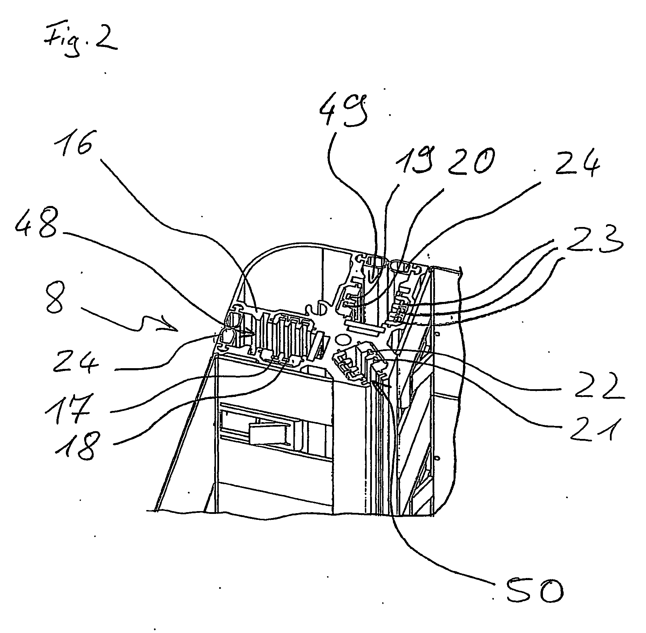

Fig. 2 zeigt eine perspektivische Ansicht von schräg oben auf den Stativkopf 8 im Bereich eines Stativkopfprofils 16. Zur besseren Darstellung ist hier der Deckel des Stativkopfs 8 weggelassen. Das Stativkopfprofil 16 ist im Eckbereich des Stativkopfes 8 angeordnet. Das Stativkopfprofil 16 ist so gestaltet, dass es drei grundsätzlich quaderförmige Vertiefungen 48, 49, 50 aufweist, die so angeordnet sind, dass sich jeweils eine Vertiefung 48, 49 von zwei Außenseiten des Stativkopfs 8 nach innen erstreckt, und eine quaderförmige Vertiefung 50 vom Innenraum des Stativkopfs 8 in Richtung außen erstreckt.

Die quaderförmigen Vertiefungen 48, 49, 50 weisen an ihren Seitenflächen Stromschienen auf. An einer Seite einer Vertiefung 48, die sich von einer Außenseite nach innen erstreckt, ist eine Stromschiene 17 und eine Stromschiene 18 vorgesehen, die Bestandteile eines zweipoligen Leitungssystems sind. In der sich von außen nach innen erstreckenden Vertiefung 49 sind eine dritte Stromschiene 19 und eine vierte Stromschiene 20 vorgesehen. In der Seitenfläche der sich von innen nach außen erstreckenden Vertiefung 50 sind eine fünfte Stromschiene 21 und eine sechste Stromschiene 22 vorgesehen. Die erste Stromschiene 17, die dritte Stromschiene 19 und die fünfte Stromschiene 21 sind leitend miteinander verbunden. Die zweite Stromschiene 18, die vierte Stromschiene 20 und die sechste Stromschiene 22 sind ebenfalls leitend miteinander verbunden. Die erste und zweite, dritte und vierte, und fünfte und sechste Stromschienen sind durch Isolierkörper jeweils voneinander getrennt. Auf der gegenüberliegenden Seite der dritten Stromschiene 19 und vierten Stromschiene 20 sind drei siebte Stromschienen 23 dargestellt. Die siebten Stromschienen 23 dienen zur Stromversorgung des Stativkopfs 8 und seiner angebauten Komponenten. Die erste Stromschiene 17, zweite Stromschiene 18, dritte Stromschiene 19, vierte Stromschiene 20, fünfte Stromschiene 21 und sechste Stromschiene 22 bilden Bestandteile eines Leitungssystems eines Bussystems zum Übertragen von Anweisungen von Steuerelementen an Aktoren.

Die Struktur und die Form des Stativkopfs weicht in alternativen Ausführungsformen von dem beschriebenen Stativkopf 8 ab. Alternative Ausführungsformen weisen z.B. keinen quaderförmigen Querschnitt auf, sondern eine andere geeignete Form. Auch der Aufbau mit Profilen und die Gestaltung der Profile mit drei quaderförmigen Vertiefungen sind nicht obligatorisch, sondern können in weiteren Ausführungsformen durch alternative Strukturen ausgebildet sein.

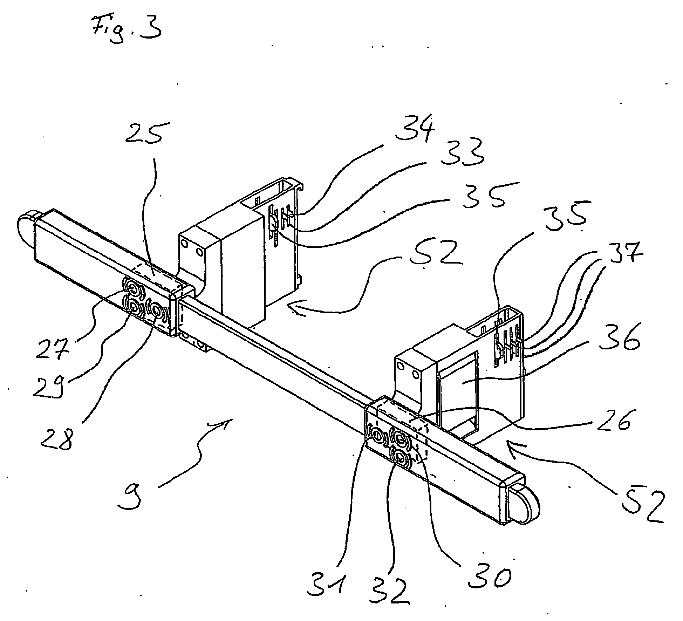

Fig. 3 zeigt den Bediengriff 9 in einer perspektivischen Darstellung in einem ausgebauten Zustand. Innerhalb des Bediengriffs sind ein erster Sender 25 und ein zweiter Sender 26 vorgesehen. Der erste Sender 25 ist mit einer Eingabetastatur mit mehreren Tastern, nämlich mit einem ersten oberen Taster 27, einem ersten mittleren Taster 28 und einem ersten unteren Taster 29 versehen. Der zweite Sender 26 ist ebenfalls mit einer Eingabetastatur, nämlich mit einem zweiten oberen Taster 30, einem zweiten mittleren Taster 31 und einem zweiten unteren Taster 32 versehen. Der erste Sender 25 ist mit nicht gezeigten Kabelverbindungen mit einem ersten Leitungskontakt 33 und einem zweiten Leitungskontakt 34 verbunden. Die beiden Leitungskontakte 33, 34 sind in Fig. 3 in einer verriegelten Stellung dargestellt, in der sie seitlich aus einer Wand eines Befestigungselements 52 des Bediengriffs 9 herausragen. Benachbart zu den Leitungskontakten 33, 34 ist eine Verriegelungsplatte 35 angeordnet, die axial drehfest mit den Leitungskontakten 33, 34 verbunden ist. An dem in Fig. 3 rechtsseitig dargestellten Befestigungselement 52 des Bediengriffs 9 ist ebenfalls eine Verriegelungsplatte 35 dargestellt, die drehfest mit zwei Leitungskontakten, die hier nicht dargestellt sind, verbunden ist, sowie mit drei Niederspannungskontakten 37 drehfest verbunden ist, die eine Stromversorgung von Anbauteilen sicherstellen. In dem rechtsseitig dargestellten Befestigungselement 52 sind die Verriegelungsplatte 35, die nicht gezeigten Leitungskontakte und die Niederspannungskontakte 37 drehfest mit einem Verriegelungshebel 36 verbunden.

Im Betrieb werden bei einem Herausklappen des Verriegelungshebels 36 in eine horizontale Lage die Verriegelungsplatte 35, die nicht gezeigten Leitungskontakte und die Niederspannungskontakte 37 um ca. 90° verdreht, so dass sie in das Befestigungselement 52 eintreten und somit eine Montage des Bediengriffs 9 in den zylinderförmigen Vertiefungen 48, 49, 50 des Stativkopfs 8 ermöglichen. Bei einem Herunterklappen des Verriegelungshebels 36 in die dargestellte Position treten die Verriegelungsplatte 35, die Leitungskontakte und die Niederspannungskontakte 37 wieder aus dem Befestigungselement 52 aus, die Verriegelungsplatte 35 verriegelt den Bediengriff in dem Stativkopfprofil 16, und die Leitungskontakte und die Niederspannungskontakte 35 stellen einen leitenden Kontakt mit den Stromschienen 17 bis 22 dar. Analog erfolgt die Verriegelung und Kontaktierung an dem in Fig. 3 linksseitig gezeigten Befestigungselement 52 des Bediengriffs 9.

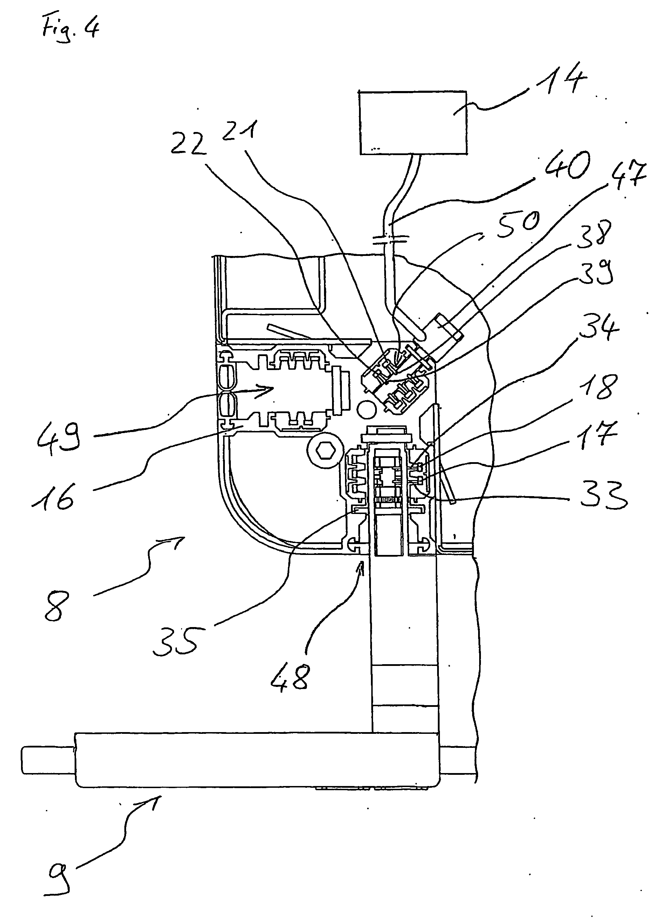

Der Bediengriff 9 und der Stativkopf 8 sind in Fig. 4 in der verriegelten und kontaktierten Situation dargestellt, in der der Bediengriff 9 in der in der Figur unten dargestellten Vertiefung 48 verriegelt und kontaktiert ist.

In der sich von innen nach außen, in Fig. 4 von der oberen rechten Ecke des Stativkopfprofils 16 in Richtung der äußeren Ecke des Stativkopfprofils 16 erstreckend dargestellten Vertiefung 50 ist ein Verbindungselement 47, das einen dritten Leitungskontakt 38 und einen vierten Leitungskontakt 39 aufweist, verriegelt. Die Leitungskontakte 38, 39 sind mit den Stromschienen 21, 22 in einem leitenden Kontakt. Da die fünfte Stromschiene 21 mit der ersten Stromschiene 17 und der dritten Stromschiene 19 verbunden ist, und die sechste Stromschiene 22 mit der zweiten Stromschiene 18 und der vierten Stromschiene 20 verbunden ist, sind die Leitungskontakte 38, 39 des Verbindungselements 47 mit den Leitungskontakten 33, 34 des Bediengriffs 9 in Verbindung. Von dem Verbindungselement 47 ausgehend erstreckt sich ein Leitungskabel 40 bis zu dem Empfänger 14, der im oberen Schwenkarm 4 der medizinischen Versorgungseinheit 1 angeordnet ist (siehe Fig. 1). Somit wird durch die Stromschienen 17 bis 22 und dem Leitungskabel 40 ein zweipoliges Leitungssystem gebildet.

In alternativen Ausführungen kann das Leitungssystem auch mehr Pole als zwei aufweisen, oder in einer weiteren alternativen Ausführung kann ein Pol über das leitfähige Gehäuse realisiert werden.

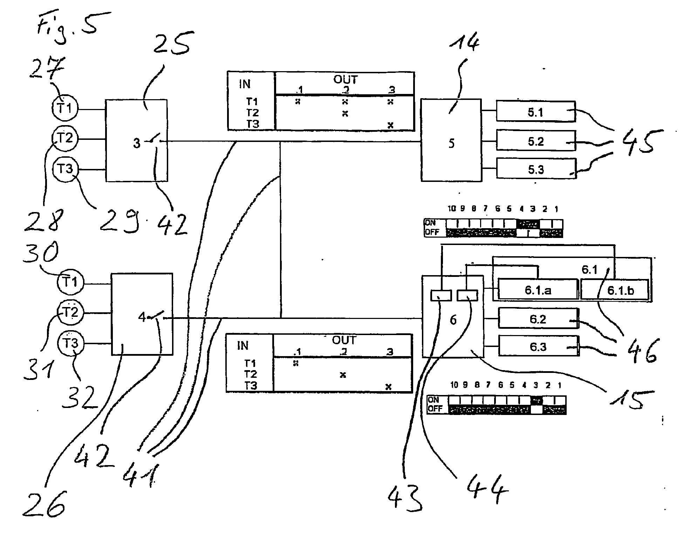

Fig. 5 zeigt ein Blockschaltbild eines Bussystems. Das Bussystem weist ein Leitungssystem 41, das wie oben beschrieben aus den Stromschienen 17 bis 22 und dem Leitungskabel 40 gebildet wird, auf. In das Bussystem ist der erste Sender 25 eingebunden, der die Adresse 3 aufweist. Weiterhin ist der zweite Sender 26 eingebunden, der die Adresse 4 aufweist. Die Empfänger 14 bzw. 15 weisen die Adresse 5 bzw. 6 auf und sind ebenfalls in das Bussystem eingebunden. Der Empfänger 14 weist drei Ausgänge 45 auf, die mit 5.1, 5.2 und 5.3 bezeichnet sind. Der Empfänger 15 weist drei Ausgänge 46 auf, die mit 6.1, 6.2 und 6.3 bezeichnet sind.

Die Sender 25, 26 weisen jeweils eine Verbindungsvorrichtung zur Verbindung der Sender 25, 26 mit dem Leitungssystem 41 auf. Der Sender 25, 26 ist so ausgebildet, dass er in Abhängigkeit von dem Drücken eines Tasters (T1) 27, eines Tasters (T2) 28 oder eines Tasters (T3) 29 ein bestimmtes Kommando in das Leitungssystem 41 abschickt. Analog schickt der zweite Sender 26 in Abhängigkeit von einer Betätigung eines Tasters (T1) 30, eines Tasters (T2) 31 oder eines Tasters (T3) 32 ein Kommando in das Leitungssystem 41 ab. Die Sender 25, 26 sind jeweils über einen Analogschalter 42 mit dem Leitungssystem 41 verbunden. Der Schalter 42 wird nur durchgeschaltet, wenn jeweils einer der Taster 27 - 29 oder 30 - 32 betätigt wird. Somit wird verhindert, dass ein fehlerhaft ausgesendetes Kommando des Senders 25 oder 26 in das Leitungssystem 41 geschickt wird, ohne dass tatsächlich einer der Taster 27, 28, 29 gedrückt ist.

Die Empfänger 14, 15 weisen ebenfalls jeweils Vorrichtungen zur Verbindung der Empfänger 14, 15 mit dem Leitungssystem 41 auf. Der Empfänger 14, 15 erkennt das ihn ansprechende Kommando anhand der Adresse des Senders 25, 26, das mit dem Kommando mitgeschickt wird. Der Empfänger 14 mit der Adresse 5 und der Empfänger 15 mit der Adresse 6 setzen das sie ansprechende Kommando jeweils in dem angesprochenen Ausgang 45, 46 in einen Schaltbefehl um. In dem Schaltschema in Fig. 5, das unterhalb des Empfängers 14 dargestellt ist, ist zu erkennen, dass der Empfänger 14 auf Kommandos des Senders 25 mit der Adresse 3 und des Senders 26 mit der Adresse 4 reagiert. Aus dem Schaltschema, das unterhalb des Empfängers 15 angeordnet ist, ist zu erkennen, dass der Empfänger 15 nur auf Kommandos des Senders 25 mit der Adresse 3 reagiert. Es ist also möglich, die Empfänger 14, 15 so zu konfigurieren, dass sie entweder nur auf die Kommandos von einem Sender 25, 26 reagieren, oder auf die Kommandos von mehreren Sendern 25, 26 reagieren. Diese Konfiguration wird den Empfängern über eine Konfigurationssoftware zugewiesen.

Weiterhin besteht auch die Möglichkeit, mit einem Sender 25, 26 nicht nur einen Empfänger 14, 15 anzusprechen, sondern mehrere, wie hier im Fall des Senders 25 mit der Adresse 3, beide Empfänger 14, 15 zu veranlassen, auf Kommandos des Senders 25 reagieren, was aus den beiden Schaltschemata unterhalb der Empfänger 14 und 15 ersichtlich ist.

Das zwischen dem Sender 25 und dem Empfänger 14 angeordnet dargestellte Schaltschema zeigt, wie die Betätigung der Taster (T1) 27, 30, der Taster (T2) 28, 31, und der Taster (T3) 29, 32 in Schaltbefehle der Ausgänge 45 umgesetzt werden. Das zwischen dem Sender 26 und dem Empfänger 15 angeordnet dargestellte Schaltschema zeigt, wie die Betätigung der Taster (T1) 27, 30, der Taster (T2) 28, 31, und der Taster (T3) 29, 32 in Schaltbefehle der Ausgänge 46 umgesetzt werden. Aus diesen Schaltschemata und aus den beiden anderen Schaltschemata ist zu erkennen, dass das Drücken des Tasters (T1) 27 einen Schaltbefehl der mit 5.1, 5.2 und 5.3 bezeichneten Ausgänge 45 und des mit 6.1 bezeichneten Ausgangs 46 veranlasst. Ein Drücken des Tasters (T2) 28 veranlasst nur einen Schaltbefehl der mit 5.2 und 6.2 bezeichneten Ausgänge 45, 46. Ein Drücken des Tasters (T3) 29 veranlasst nur einen Schaltbefehl in den mit 5.3 und 6.3 bezeichneten Ausgängen 45, 46. Ein Drücken des Tasters (T1) 30 veranlasst einen Schaltbefehl der mit 5.1, 5.2 und 5.3 bezeichneten Ausgänge 45. Ein Drücken des Tasters (T2) 31 veranlasst nur einen Schaltbefehl des mit 5.2 bezeichneten Ausgangs 45. Ein Drücken des Tasters (T3) 32 veranlasst nur einen Schaltbefehl des mit 5.3 bezeichneten Ausgangs 45. Mit dem Kommando eines Senders können also mehrere Empfänger angesteuert werden.

Der Empfänger 15 weist Empfangseinheiten 43, 44 auf, die jeweils mit einem der Ausgänge 46 verbunden sind. Der mit der Empfangseinheit 43 verbundene Ausgang 46, der mit 6.1.b bezeichnet ist, und der mit der Empfangseinheit 44 verbundene Ausgang 46, der mit 6.1.a bezeichnet ist, sind in Reihe geschaltet. Die Empfangseinheiten 43, 44 weisen jeweils die gleiche Hardware auf, werden aber durch verschiedene Programme angesteuert. Der Schaltbefehl an den Ausgang, der mit 6.1 bezeichnet ist, wird nur dann durchgeführt, wenn beide Empfangseinheiten 43, 44 ein Schaltsignal an den jeweiligen Ausgang, die mit 6.1.a und 6.1.b bezeichnet sind, geben. Durch das Verwenden von verschiedener Software, die günstigerweise von zwei verschiedenen Programmierern erstellt wurde, wird sichergestellt, dass ein Fehler in dem Empfänger 15 nicht zu einem ungewollten Schaltbefehl des Ausgangs 46, der mit 6.1 bezeichnet ist, gesetzt wird. Diese Ansteuerung des Ausgangs 46 wird bei sicherheitskritischen Funktionen, wie zum Beispiel bei der Hubbewegung eines höhenverstellbaren Schwenkarms verwendet, so dass keine Gefährdung für einen Patienten durch Selbstanlauf eines Arms auftreten kann. Der Aufbau mit mehreren in Reihe geschalteten Ausgängen 45, 46 mit verschiedenen Empfangseinheiten 43, 44 kann nur in einem oder in mehreren Empfängern 14, 15 realisiert sein.

Eine weitere Sicherheitseinrichtung zum Verhindern einer Fehlfunktion ist, dass der Sender 25, 26 so ausgebildet ist, dass er ein Kommando zyklisch schickt, also immer wieder wiederholt. Der Empfänger 14, 15 führt einen Schaltvorgang in dem angesprochenen Ausgang 45, 46 so lang aus, solange er das Kommando empfängt und deaktiviert den Ausgang erst nach einer vorbestimmten Zeit, z.B. 100ms, wenn kein Kommando mehr empfangen wird. Der Ausgang ist also nur so lang geschaltet, solange der Sender 25, 26 ein Kommando schickt. Sollte jedoch fehlerhafterweise ein Datenpaket eines Kommandos verloren gehen, wird der Ausgang 25, 26 nicht sofort deaktiviert.

Zur Konfiguration des Bussystems wird die Konfigurationssoftware verwendet, mit der jedem Sender 25, 26 und jedem Empfänger 15, 16 jeweils eine Adresse zugewiesen werden kann. In einer alternativen Ausführungsformen werden die Adressen der Sender 25, 26 und der Empfänger 15, 16 mit Schaltern eingestellt, oder sind festgelegt.

Im Betrieb besteht die Möglichkeit, einen oder mehrere Sender 25, 26 von dem Bussystem abzutrennen, d.h. beispielsweise den Bediengriff 9 von dem Stativkopf 8 abzunehmen, um ihn an einer anderen Stelle wieder an dem Stativkopf 8 anzubringen. Der Sender 25, 26 ist so ausgebildet, dass beim erneuten Anbringen des Bediengriffs 9 an einer Position entlang der Stromschienen 17 bis 22 auch bei laufendem Betrieb des Bussystems die Funktion des Senders 25, 26 automatisch gegeben ist, d.h. dass er automatisch sendebereit ist.

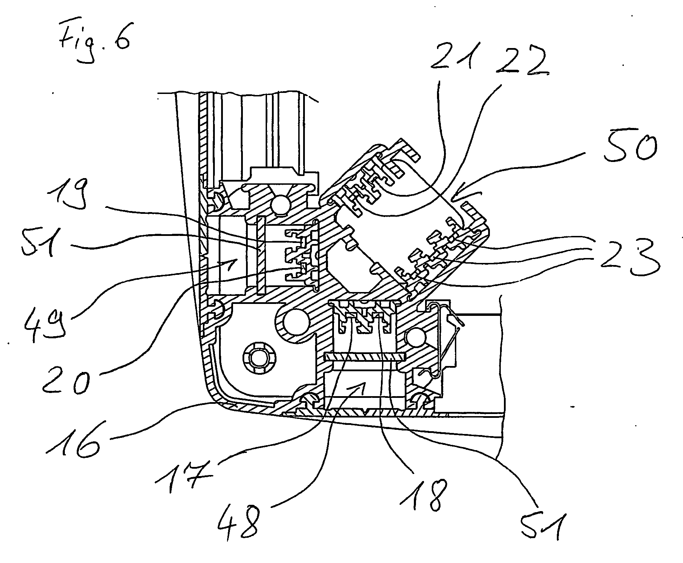

In Fig. 6 ist eine alternative Ausführungsform eines Stativkopfprofils 16 gezeigt. Der wesentliche Unterschied zu dem Stativkopfprofil 16 in Fig. 2 und Fig. 4 ist die Anordnung der Stromschienen 17 bis 20 in den äußeren Vertiefungen 48, 49, und die Verrieglungsmöglichkeit des Bediengriffs im Stativkopfprofil 16. Die Stromschienen 17 bis 20 sind hier nicht an den Seitenwänden der Vertiefungen 48, 49 vorgesehen, sondern jeweils an den hinteren Wänden. Zwischen der hinteren Wand und den Öffnungen an den Außenseiten des Stativkopfprofils 16 ist eine Befestigungsleiste 51 zum Befestigen von z.B. einem Bediengriff vorgesehen.

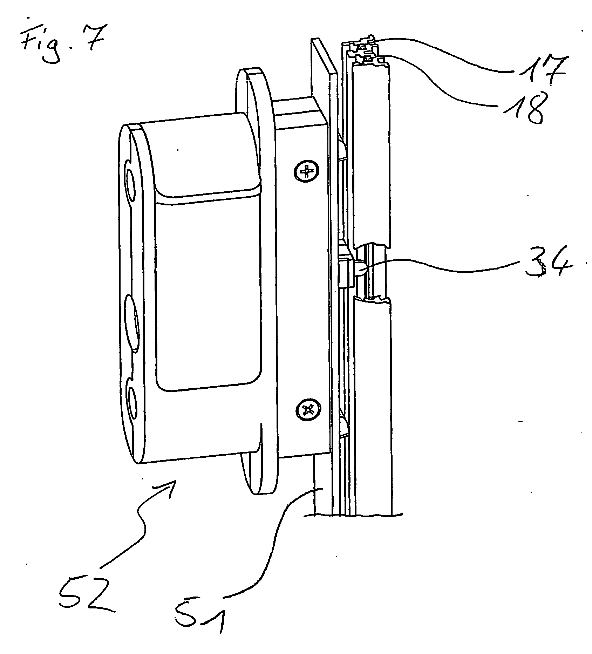

Ein zu dem in Fig. 6 gezeigten Stativkopfprofil gehöriges Befestigungselement 52 beispielsweise eine Bediengriffs ist in Fig. 7 gezeigt. Die Leitungskontakte, von denen hier nur der Leitungskontakt 34 gezeigt ist, bewegen sich hier nicht radial, sondern axial aus dem Befestigungselement 52 und stellen einen leitenden Kontakt zu den Stromschienen 17, 18 dar. Die Verriegelung erfolgt hier nicht über drehbare Verriegelungsplatten 35, sondern das Befestigungselement 52 wird in die Befestigungsleiste 51 eingehakt und gegen Aushaken gesichert.

In einer alternativen Ausführungsform der medizinischen Versorgungseinheit, bei der an einer Deckenbefestigung 2 nicht ein Deckenstativ in Form eines Stativkopfs mit den zugehörigen Armen und Gelenken, sondern zwei oder mehrere Deckenstative vorgesehen sind, ist für jeden der Deckenstative ein eigenes Bussystem vorgesehen. Die Bussysteme sind dann mit einem Router verbunden. Die Bussysteme weisen jeweils einen lokalen Adressbereich, der nur die Empfänger des jeweiligen Deckenstativs umfasst, sowie einen globalen Adressbereich, der auch die Adressen der Empfänger der weiteren Deckenstative umfasst, auf. Hierbei ist es beispielsweise denkbar, dass im globalen Adressbereich Empfänger mit Ausgängen für Beleuchtungen, die an mehreren Stativköpfen analog geschaltet werden sollen, enthalten sind.

In nicht beansprüchten alternativen Ausführungsformen ist die Übertragung der Kommandos nicht über ein Übertragungssystem in Form eines Leitungssystems ausgeführt. Das Übertragungssystem ist dort drahtlos z.B. in Form eines Funkübertragungssystems oder eines optischen Übertragungssystems ausgeführt. In einer speziellen Ausführungsform ist das Funkübertragungssystem als Bluetooth-Bussystem ausgeführt.

In weiteren alternativen Ausführungsformen variiert die Anzahl der Sender und der Empfänger, sowie die Anzahl der in den jeweiligen Sendern enthaltenen Steuerungselemente, also z.B. Taster, und Ausgänge. Auch die Anzahl der Sender in den Bediengriffen variiert in Abhängigkeit von der Ausstattung der medizinischen Versorgungseinheit. Die Anzahl der Leitungskontakte an den Verbindungselementen der Sender und Empfänger ist ebenfalls variabel und hängt von der Anzahl der Pole und der Konfiguration des Bussystems ab.

## Patentansprüche

1. Medizinische Versorgungseinheit (1) mit Steuerungselementen (27 - 32) und Aktoren, und mit einem Bussystem zum Übertragen von Anweisungen der Steuerungselemente (27 - 32) an die Aktoren, wobei das Bussystem aufweist:
ein Übertragungssystem zum Übertragen von Signalen als Kommandos,
mindestens einen Sender (25, 26), der eine Adresse aufweist, wobei der Sender (25, 26) so ausgebildet ist, dass er mindestens ein Kommando abschickt,
mindestens einen Empfänger (14, 15), der eine Adresse aufweist und mit mindestens einem Ausgang (45, 46) versehen ist, wobei der Empfänger (14, 15) so ausgebildet ist, dass er Kommandos des Senders (25, 26) empfängt und ihn ansprechende Kommandos an dem Ausgang (45, 46) in Schaltbefehle umsetzt,
**dadurch gekennzeichnet, dass** der Sender (25, 26) einen Analogschalter (42) aufweist, der ausgebildet ist, dass er den Sender (25, 26) mit dem Übertragungssystem so verbindet, so dass das Kommando nur bei geschlossenem Analogschalter (42) an das Übertragungssystem geschickt wird, wobei der Analogschalter (42) nur durchgeschaltet wird, wenn jeweils eines der Steuerungselemente (27-32) betätigt wird.

2. Medizinische Versorgungseinheit (1) mit Steuerungselementen (27 - 32) und Aktoren, und mit einem Bussystem zum Übertragen von Anweisungen der Steuerungselemente (27 - 32) an die Aktoren, wobei das Bussystem aufweist:
ein Übertragungssystem zum Übertragen von Signalen als Kommandos,
mindestens einen Sender (25, 26), der eine Adresse aufweist, wobei der Sender (25, 26) so ausgebildet ist, dass er mindestens ein Kommando abschickt,
mindestens einen Empfänger (14, 15), der eine Adresse aufweist und mit mindestens einem Ausgang (45, 46) versehen ist, wobei der Empfänger (14, 15) so ausgebildet ist, dass er Kommandos des Senders (25, 26) empfängt und ihn ansprechende Kommandos an dem Ausgang (45, 46) in Schaltbefehle umsetzt,
**dadurch gekennzeichnet, dass** der Sender (25, 26) so ausgebildet ist, dass er das Kommando zyklisch schickt und der Empfänger (14, 15) so ausgebildet ist, dass er den Ausgang (45, 46) nach einer vorbestimmten Zeit deaktiviert, wenn das zutreffende Kommando nicht empfangen wird.

3. Medizinische Versorgungseinheit (1) mit Steuerungselementen (27 - 32) und Aktoren, und mit einem Bussystem zum Übertragen von Anweisungen der Steuerungselemente (27 - 32) an die Aktoren, wobei das Bussystem aufweist:
ein Übertragungssystem zum Übertragen von Signalen als Kommandos,
mindestens einen Sender (25, 26), der eine Adresse aufweist, wobei der Sender (25, 26) so ausgebildet ist, dass er mindestens ein Kommando abschickt,
mindestens einen Empfänger (14, 15), der eine Adresse aufweist und mit mindestens einem Ausgang (45, 46) versehen ist, wobei der Empfänger (14, 15) so ausgebildet ist, dass er Kommandos des Senders (25, 26) empfängt und ihn ansprechende Kommandos an dem Ausgang (45, 46) in Schaltbefehle umsetzt,
**dadurch gekennzeichnet, dass** das Bussystem so ausgebildet ist, dass der Empfänger (25, 26) zwei getrennte Empfangseinheiten (43, 44) mit jeweils einem Ausgang (45, 46) aufweist, und die zwei Ausgänge (45, 46) in Reihe miteinander verbunden sind.

4. Medizinische Versorgungseinheit (1) gemäß Anspruch 3, **dadurch gekennzeichnet, dass** das Bussystem so ausgebildet ist, dass die zwei Empfangseinheiten (43, 44) eine gleiche Hardware aber eine unterschiedliche Software aufweisen.

5. Medizinische Versorgungseinheit (1) gemäß einem der vorangehenden Ansprüche, **dadurch gekennzeichnet, dass** das Übertragungssystem als drahtloses Übertragungssystem ausgeführt ist.

6. Medizinische Versorgungseinheit (1) gemäß einem der vorangehenden Ansprüche, **dadurch gekennzeichnet, dass** das Übertragungssystem als Leitungssystem (41) ausgeführt ist, und der Sender (25, 26) mit einer Verbindungsvorrichtung zur Verbindung des Senders (25, 26) mit dem Leitungssystem (41), und der Empfänger (14, 15) mit einer Verbindungsvorrichtungen zur Verbindung des Empfängers (14, 15) mit dem Leitungssystem (41) versehen ist.

7. Medizinische Versorgungseinheit (1) gemäß Anspruch 6, **dadurch gekennzeichnet, dass** das Leitungssystem (41) Stromschienen (17 - 22) und der Sender (25, 26) ein Befestigungselement 52 zum flexiblen Anbringen des Senders (25, 26) an verschiedenen Positionen entlang der Stromschiene (17 - 22) aufweist.

8. Medizinische Versorgungseinheit (1) gemäß einem der Ansprüche 6 oder 7, **dadurch gekennzeichnet, dass** der Sender (25, 26) so ausgebildet ist, dass er nach einer Kontaktierung mit dem Leitungssystem (41) bei laufenden Bussystem automatisch sendebereit ist.

9. Medizinische versorgungseinheit (1) gemäß einem der vorangehenden Ansprüche, **dadurch gekennzeichnet, dass** das Bussystem so ausgebildet ist, dass über eine Konfigurationssoftware den Sendern (25, 26) und den Empfängern (14, 15) jeweils eine Adresse zugewiesen werden kann.

10. Medizinische Versorgungseinheit (1) gemäß einem der vorangehenden Ansprüche, **dadurch gekennzeichnet, dass** der Sender (25, 26) mit einer Eingabetastatur mit mehreren Tastern (27 - 32) versehen ist.

11. Medizinische Versorgungseinheit (1) gemäß Anspruch 9 und 10, **dadurch gekennzeichnet, dass** die Empfänger (14, 15) mehrere Ausgänge (45, 46) aufweisen, und das Bussystem so ausgebildet ist, dass die Konfigurationssoftware den verschiedenen Tastern (27 - 32) verschiedene Ausgänge (45, 46) zuweist.

12. Medizinische Versorgungseinheit (1) gemäß einem der vorangehenden Ansprüche, **dadurch gekennzeichnet, dass** das Bussystem so ausgebildet ist, dass ein Empfänger (14, 15) mit einer vorbestimmten Adresse das zutreffende Kommando von mehreren Sendern (25, 26) empfängt und in Schaltbefehle an seinem Ausgang (45, 46) umsetzt.

13. Medizinische Versorgungseinheit (1) gemäß einem der vorangehenden Ansprüche, **dadurch gekennzeichnet, dass** das Bussystem so ausgebildet ist, dass ein Sender (25, 26) mit einer vorbestimmten Adresse ein Kommando aussendet und mehrere Empfänger (14, 15) das Kommando empfangen und in Schaltbefehle an ihren Ausgängen (45, 46) umsetzen.

14. Medizinische Versorgungseinheit (1) gemäß einem der vorangehenden Ansprüche, **dadurch gekennzeichnet, dass** einer der Ausgänge (45, 46) mit einem Betätigungselement einer Bremse oder eines Hubmotors verbunden ist.

15. Medizinische Versorgungseinheit (1) gemäß einem der vorangehenden Ansprüche, **dadurch gekennzeichnet, dass** die medizinische Versorgungseinheit (1) zwei Bussysteme mit jeweils einem lokalen und einen globalen Adressbereich, und einen Router aufweist, der eine Datenverbindung zwischen den globalen Adressbereichen der zwei Bussysteme herstellt.

## Claims

1. Medical supply unit (1) having control elements (27 - 32) and actuators and a bus system for transmitting commands of the control elements (27 - 32) to the actuators, wherein the bus system comprises:
a transmission system for transmitting signals as commands,
at least one transmitter (25, 26) having an address, wherein the transmitter (25, 26) is configured such that it sends at least one command,
at least one receiver (14, 15) having an address, provided with at least one output (45 46), wherein the receiver (14, 15) is configured such that it receives commands of the transmitter (25, 26) and that it converts commands addressed to it into switching commands at the output (45, 46),
**characterized in that** the transmitter (25, 26) comprises an analog switch (42) configured to connect the transmitter (25, 26) to the transmission system such that the command is sent to the transmission system only when the analog switch (42) is closed, wherein the analog switch (42) is only interconnected when one of the control elements (27 - 32) is respectively operated.

2. Medical supply unit (1) having control elements (27 - 32) and actuators and a bus system for transmitting commands of the control elements (27 - 32) to the actuators, wherein the bus system comprises:
a transmission system for transmitting signals as commands,
at least one transmitter (25, 26) having an address, wherein the transmitter (25, 26) is configured such that it sends at least one command,
at least one receiver (14, 15) having an address and provided with at least one output (45, 46), wherein the receiver (14, 15) is configured such that it receives commands of the transmitter (25, 26) and that it converts commands addressed to it into switching signals at the output (45, 46),
**characterized in that** the transmitter (25, 26) is configured such that it cyclically sends the command and that the receiver (14, 15) is configured such that it deactivates the output (45, 46) after a certain interval when the appropriate command is not received.

3. Medical supply unit (1) having control elements (27 - 32) and actuators and a bus system for transmitting commands of the control elements (27 - 32) to the actuators, wherein the bus system comprises:
a transmission system for transmitting signals as commands,
at least one transmitter (25, 26) having an address, wherein the transmitter (25, 26) is configured such that it outputs at least one command,
at least one receiver (14, 15) having an address, provided with at least one output (45, 46), wherein the receiver (14, 15) is configured such that it receives commands of the transmitter (25, 26) and that it converts commands addressed to it into switching commands at the output (45, 46),
**characterized in that** the bus system is configured such that the receiver (25, 26) comprises two separate receiving units (43, 44) with one respective output (45, 46) and that the two outputs (45, 46) are connected together in series.

4. Medical supply unit (1) according to claim 3, **characterized in that** the bus system is configured such that the two receiving units (43, 44) comprise an identical hardware but a different software.

5. Medical supply unit (1) according to any of the preceding claims, **characterized in that** the transmission system is accomplished as a wireless transmission system.

6. Medical supply unit (1) according to any of the preceding claims, **characterized in that** the transmission system is accomplished as a line system (41), and the transmitter (25, 26) is provided with a connection device for connecting the transmitter (25, 26) to the line system (41), and the receiver (14, 15) is provided with a connection device for connecting the receiver (14, 15) to the line system (41).

7. Medical supply unit (1) according to claim 6, **characterized in that** the line system (41) comprises conductor rails (17 - 22) and that the transmitter (25, 26) comprises a fixing element (52) for flexibly fixing the transmitter (25, 26) at various positions along the conductor rail (17 - 22).

8. Medical supply unit (1) according to any of the claims 6 or 7, **characterized in that** the transmitter (25, 26) is configured such that it is automatically ready for transmission after it is contacted to the line system (41) when the bus system is active.

9. Medical supply unit (1) according to any of the preceding claims, **characterized in that** the bus system is configured such that an address may respectively be allocated to the transmitters (25, 26) and the receivers (14, 15) by means of a configuration software.

10. Medical supply unit (1) according to any of the preceding claims, **characterized in that** the transmitter (25, 26) is provided with an input keypad having multiple keys (27 - 32).

11. Medical supply unit (1) according to claim 9 and 10, **characterized in that** the receiver (14, 15) comprises multiple outputs (45, 46) and that the bus system is configured such that the configuration software allocates various outputs (45, 46) to the various keys (27 - 32).

12. Medical supply unit (1) according to any of the preceding claims, **characterized in that** the bus system is configured such that a receiver (14, 15) having a predetermined address receives the appropriate command of various transmitters (25, 26) and converts it into a switching command at its output (45, 46).

13. Medical supply unit (1) according to any of the preceding claims, **characterized in that** the bus system is configured such that a transmitter (25, 26) having a predetermined address transmits a command and various receivers (14, 15) receive the command and converts it into switching commands at its outputs (45, 46).

14. Medical supply unit (1) according to any of the preceding claims, **characterized in that** one of the outputs (45, 46) is connected to an actuating member of a brake or of a lifting motor.

15. Medical supply unit (1) according to any of the preceding claims, **characterized in that** the medical supply unit (1) comprises two bus systems respectively having a local address range and a global address range, and a router creating a data connection between the global address ranges of the two bus systems.

## Revendications

1. Unité d'alimentation médicale (1) avec des éléments de commande (27 - 32) et des actionneurs, et avec un système de bus pour la transmission d'instructions des éléments de commande (27 - 32) aux actionneurs, le système de bus comportant :
un système de transmission pour la transmission de signaux en tant que commandes,
au moins un émetteur (25, 26) doté d'une adresse, ledit émetteur (25, 26) étant réalisé de manière à émettre au moins une commande,
au moins un récepteur (14, 15) doté d'une adresse, et qui présente au moins une sortie (45, 46), ledit récepteur (14, 15) étant réalisé de manière à recevoir des commandes des l'émetteur (25, 26) et à convertir des commandes auxquelles il réagit en instructions de commutation sur la sortie (45, 46),
**caractérisée en ce que** l'émetteur (25, 26) comporte un commutateur analogique (42) prévu pour connecter l'émetteur (25, 26) au système de transmission de manière à n'adresser la commande au système de transmission que si le commutateur analogique (42) est fermé, le commutateur analogique (42) n'étant activé que si un des éléments de commande (27 - 32) est actionné.

2. Unité d'alimentation médicale (1) avec des éléments de commande (27 - 32) et des actionneurs, et avec un système de bus pour la transmission d'instructions des éléments de commande (27 - 32) aux actionneurs, le système de bus comportant :
un système de transmission, pour la transmission de signaux en tant que commandes,
au moins un émetteur (25, 26) doté d'une adresse, ledit émetteur (25, 26) étant réalisé de manière à émettre au moins une commande,
au moins un récepteur (14, 15) doté d'une adresse, et qui présente au moins une sortie (45, 46), ledit récepteur (14, 15) étant réalisé de manière à recevoir des commandes des l'émetteur (25, 26) et à convertir des commandes auxquelles il réagit en instructions de commutation sur la sortie (45, 46),
**caractérisée en ce que** l'émetteur (25, 26) est réalisé de manière à émettre cycliquement la commande et **en ce que** le récepteur (14, 15) est réalisé de manière à désactiver la sortie (45, 46) après un temps défini, si la commande pertinente n'est pas reçue.

3. Unité d'alimentation médicale (1) avec des éléments de commande (27 - 32) et des actionneurs, et avec un système de bus pour la transmission d'instructions des éléments de commande (27 - 32) aux actionneurs, le système de bus comportant :
un système de transmission pour la transmission de signaux en tant que commandes,
au moins un émetteur (25, 26) doté d'une adresse, ledit émetteur (25, 26) étant réalisé de manière à émettre au moins une commande,
au moins un récepteur (14, 15) doté d'une adresse, et qui présente au moins une sortie (45, 46), ledit récepteur (14, 15) étant réalisé de manière à recevoir des commandes des l'émetteur (25, 26) et à convertir des commandes auxquelles il réagit en instructions de commutation sur la sortie (45, 46),
**caractérisée en ce que** le système de bus est réalisé de telle manière que le récepteur (25, 26) comporte deux unités de réception (43, 44) séparées ayant une sortie (45, 46) chacune, et **en ce que** les deux sorties (45, 46) sont reliées l'une à l'autre en série.

4. Unité d'alimentation médicale (1) selon la revendication 3, **caractérisée en ce que** le système de bus est réalisé de telle manière que les deux unités de réception (43, 44) présentent le même matériel mais des logiciels différents.

5. Unité d'alimentation médicale (1) selon l'une des revendications précédentes, **caractérisée en ce que** le système de transmission est réalisé comme système de transmission sans fil.

6. Unité d'alimentation médicale (1) selon l'une des revendications précédentes, **caractérisée en ce que** le système de transmission est réalisé comme système de lignes (41), et **en ce que** l'émetteur (25, 26) est pourvu d'un dispositif de connexion pour la connexion de l'émetteur (25, 26) au système de lignes (41), et le récepteur (14, 15) d'un dispositif de connexion pour la connexion de récepteur (14, 15) au système de lignes (41).

7. Unité d'alimentation médicale (1) selon la revendication 6, **caractérisée en ce que** le système de lignes (41) est pourvu de barres conductrices (17 - 22), et **en ce que** l'émetteur (25, 26) est pourvu d'un élément de fixation (52) pour l'installation flexible de l'émetteur (25, 26) à différents emplacements le long de la barre conductrice (17 - 22).

8. Unité d'alimentation médicale (1) selon l'une des revendications 6 ou 7, **caractérisée en ce que** l'émetteur (25, 26) est réalisé de manière à être automatiquement prêt à émettre après une mise en contact avec le système de lignes (41) en cas de système de bus courant.

9. Unité d'alimentation médicale (1) selon l'une des revendications précédentes, **caractérisée en ce que** le système de bus est réalisé de manière à permettre l'affection d'une adresse à chaque émetteur (25, 26) et à chaque récepteur (14, 15) au moyen d'un programme de configuration.

10. Unité d'alimentation médicale (1) selon l'une des revendications précédentes, **caractérisée en ce que** l'émetteur (25, 26) est pourvu d'un clavier de saisie à plusieurs touches (27 - 32).

11. Unité d'alimentation médicale (1) selon la revendication 9 et 10, **caractérisée en ce que** les récepteurs (14, 15) présentent plusieurs sorties (45, 46), et **en ce que** le système de bus est réalisé de telle manière que le programme de configuration affecte de sorties différentes (45, 46) aux différentes touches (27 - 32).

12. Unité d'alimentation médicale (1) selon l'une des revendications précédentes, **caractérisée en ce que** le système de bus est réalisé de telle manière qu'un récepteur (14, 15) ayant une adresse prédéfinie reçoit la commande pertinente de plusieurs émetteurs (25, 26) et convertit celle-ci en instructions de commutation sur sa sortie (45, 46).

13. Unité d'alimentation médicale (1) selon l'une des revendications précédentes, **caractérisée en ce que** le système de bus est réalisé de telle manière qu'un émetteur (25, 26) ayant une adresse prédéfinie émet une commande, et **en ce que** plusieurs récepteurs (14, 15) reçoivent la commande et convertissent celle-ci en instructions de commutation sur leurs sorties (45, 46).

14. Unité d'alimentation médicale (1) selon l'une des revendications précédentes, **caractérisée en ce qu'**une des sorties (45, 46) est reliée à un élément d'actionnement d'un frein ou d'un moteur de levage.

15. Unité d'alimentation médicale (1) selon l'une des revendications précédentes, **caractérisée en ce que** ladite unité d'alimentation médicale (1) comporte deux systèmes de bus ayant chacun une zone d'adresse locale et une zone d'adresse globale, et **en ce qu'**il comporte un routeur réalisant une liaison de données entre les zones d'adresses globales des deux systèmes de bus.
